# EUROPEAN PATENT APPLICATION

(11) **EP 2 213 768 A1**
(43) Date of publication of application: **04.08.2010**
(21) Application number: 08850376.8
(22) Date of filing: 11.11.2008
(51) Int. Cl.: C25B 1/04, C02F 1/46, C02F 1/461

(54) **METHOD AND APPARATUS FOR USING HYDROGEN**

(30) Priority: 14.11.2007 ES 200703012
(71) Applicant: Franco Gonzalez, Fidel, 08028 Barcelona (ES); Miguel Sanchez, Alexandra, 08036 Barcelona (ES); Ruiz Rodriguez, Alberto, 08760 Martorell (Barcelona) (ES)
(72) Inventor: Franco Gonzalez, Fidel, 08028 Barcelona (ES); Miguel Sanchez, Alexandra, 08036 Barcelona (ES); Ruiz Rodriguez, Alberto, 08760 Martorell (Barcelona) (ES)
(74) Representative: Durán Moya, Luis-Alfonso
(86) International application number: PCT/ES2008/000697
(87) International publication number: WO 2009/063107

(57) **Abstract**

The invention relates to a method and apparatus for using hydrogen. The method is **characterised in that** water from a sea water or other source is first preheated using solar energy and next subjected to a heating step in order to obtain steam which is transformed into water plasma at a low temperature, followed by the decomposition of the plasma by hydrolysis using electrodes and the subsequent separation of the hydrogen and oxygen obtained. The hydrogen is then transported to the location at which water is to be generated, the hydrogen undergoes oxidation and the energy therefrom is recovered, with water being regenerated for direct use.

## Description

The present invention is designed to make known a method for using hydrogen and its corresponding apparatus, which make it possible both to obtain hydrogen and use it in the generation of liquid water in the desired location, and which invention has significant characteristics of novelty and inventive step.

As is known, at present we are living in a period in which deserts are expanding, and this is affecting the Mediterranean fringe, including in countries such as Spain, Greece and Italy. Furthermore, as a consequence of climate change caused by the so-called greenhouse effect, the process of expansion of the desert has been accentuated.

The situation is so serious that, years ago, scientific circles and people who are aware of it warned about the dangers which are imminent if we do not seek solutions to the problems of desertification. For this reason, the present project has been developed for prevention of, and as a strategic solution to, these problems.

The present invention is designed to provide an economically feasible and technically satisfactory solution for obtaining hydrogen, for the purpose of permitting subsequent use of the latter in the reconstitution of water in situ, and optionally also for the generation of energy.

Various methods are known in the prior art currently available for obtaining hydrogen, for example based on organic materials such as natural gas. However, it is obvious that this is not an adequate source, since it is not very abundant, and has other applications. It is used in cases in which the industrial sector needs very pure hydrogen. There are also fermentation processes which can also provide hydrogen, however the quantities produced are small. For this reason, the present project relates to the most abundant source of hydrogen, i.e. sea water.

The process which is used at present to obtain hydrogen is the decomposition by electrolysis of a liquid plasma, in other words using an electric current to break down what is known in physics as a plasma (conductive fluid), which is prepared however using saline aqueous solutions of sodium carbonate.

Other means exist for obtaining plasmas from steam, for example capacitive plasmas formed on the basis of electric discharges which cause a low-density gas to undergo a transition process in such a way that it is converted into an excellent conductor. The problem is that, if the water plasma decomposes and forms hydrogen and oxygen, the apparatus may explode when the two gases recombine explosively. It has also been attempted to produce aqueous plasmas by means of soluble salts in hot steam, but these give very low yields.

Finally, it is possible to generate so-called thermal plasmas, which are obtained by heating steam to very high temperatures (3700 °C) by means of concentration of solar radiation, or by using the thermal energy which is released in nuclear plants. All of these means require very high energy consumption. The first method has a low cost, but depends on the existence of solar radiation, and in the case of the nuclear plants the yields are very low, since the decomposition of the plasma reaches a value of only 40%, apart from the fact that it is necessary to redesign new nuclear plants for this purpose. The inventors have carried out many studies and experiments in order to improve the methods for obtaining hydrogen. In particular, the present invention is designed to obtain low-temperature plasmas from steam, since, it has been found in the theoretical models developed by the inventors, that it is possible to obtain low-temperature plasma from steam by means of the application of scalar electrical fields, with a sinusoidal wave form, the frequency of which is in the microwave range, the scalar electrical fields acting in resonance with the absorption peaks of the steam spectrum, in the microwave range. This means that the steam which is subjected to the intense radiation of microwaves undergoes a transition process and acquires the properties of plasma, i.e. a diamagnetic fluid with excellent conductivity and absorption peaks at very low values. To this end it is acted by means of resonance, choosing the geometry of the container. The apparatus designed by the inventors in order to implement the method substantially comprises an electromagnetic wave heater with an icosahedral structure, and a plasma generator with an octahedral structure, in which the pressure and temperature of the steam can be varied, thus converting the latter into plasma, and also comprising the use of electromagnetic waves in the form of scalar electrical fields (or fields with scalar potential) of microwaves, in order to optimise the process. Consequently there will preferably be a plurality of apparatuses in parallel, for example three, in order to maintain a constant rate of production.

On the basis of the water plasma, it is possible to decompose water and separate the corresponding gases by means of electrolysis, with the use of two electrodes which are supplied with direct current in an apparatus with a geometric form, and functioning similar to the plasma generator. The hydrogen and oxygen will be separated independently into pressure tanks.

After the gases have been separated, they will be supplied to the storage tanks in which they will be compressed, and will be prepared for transport by means of the most appropriate procedure. The power supplied to the pumps for this process (as well as those of the entire installation) will be provided by means of renewable energy, or night-time supply from the mains.

Just as for the plasma generator, three elements are provided in parallel, arranged in series with the latter, in order to maintain a constant rate of production. The supply to the electrolyser of each plasma generator will take place without any cross-flow.

After the hydrogen has been obtained, the method for use of the latter according to the present invention includes transport of the hydrogen to the required locations, in which the hydrogen will be re-combined with oxygen in the air in order to obtain water once again in the required location. The aforementioned re-combination can be carried out by means of alternative thermal engines, turbines, or fuel cells, which will make it possible to obtain water and energy once again which can be used for general purposes. In relation with the present invention, account must be taken of the fact that the scalar electrical fields which are obtained in the interior of the octahedron have a far greater effect, since the transformation is far greater within the material. In fact, the energy of the scalar electrical fields decreases the internal energy of the material, but this decrease is virtually limitless, since instead of being used to create currents, it acts directly on the structure of the material. The bonds between the hydrogen and oxygen are weakened, on the basis of the action on the components of the water themselves, and the bonds ultimately separate.

A characteristic of the scalar electrical fields is that, there are no currents involved, nor are there magnetic fields involved, and this is a fundamental fact in the entire process of decomposition of the plasmas. In fact, if the intention is to decompose the water formed by the combination of the two initial gases, it is necessary to act on the plasma in order to obtain the separation of the hydrogen and oxygen, by changing the bond between the two by means of the scalar electrical fields. However, if thermal gradients or any type of instability occur in the interior of the plasma, these vectorial fields create currents which generate vectorial magnetic fields, including scalar electrical fields, the effects of which are contrary to the scalar electrical field, in other words, there is a tendency to restore the energy of the components of the water which are intended to be separated. To summarise, the currents which are induced by any type of instability contribute towards the re-combination of the gases, and the loss of efficiency of the process. For this reason it is a matter of priority to select "stable" geometries which contribute towards providing the plasma with stability.

In general, any type of instability will provide energy not only to the plasma, but to any intermediate process, and consequently the criterion of maximum stability will be used as the design criterion for all the elements or apparatuses used in the different stages of the production of the hydrogen.

With reference to the selection of the geometrical structure for the plasma generator and the electrolyser, it has been found that platonic solids, with the exception of dodecahedrons, have stable geometries, but to different extents. If we begin our analysis with a cube, it is found that this body has the lowest level of energy. In addition, cubic geometry would be unpractical, and therefore unsuitable for our objectives. This is followed by the icosahedron, and finally the octahedron. Since any type of instability in the evaporation process and in the process of generation of the plasma will contribute towards a loss of energy, and a decrease in the efficiency of all the processes, the icosahedron has been selected as the geometry which is most appropriate for the evaporator, and the octahedron has been selected as the one most appropriate for the electrolyser.

As far as the selection of materials is concerned, in the icosahedron of the evaporator there are no major problems, since the water to be evaporated cannot contain contaminants at a high steam pressure, and it is therefore sufficient to select stable materials consisting of steel or nickel steel. However, the upper surfaces of the icosahedron do not only act as an enclosure for the shape, but also are intended to act as antennae, or as a support for the directional antennae which emit microwave radiation, and heat the water which is contained in the icosahedron. These surfaces are in contact with the steam only if the water is sea water, or is uncontaminated.

It must be considered that, within the octahedron, the inner surfaces which are in contact with the plasma, apart from being an enclosure, also act as antennae which emit the microwave fields in resonance with the absorption peaks of the steam spectrum in this frequency range, and may suffer from a process of cold fusion which would affect the emitter antennae and rapidly make the materials deteriorate. For this reason, these surfaces would have to be covered by a resistant and stable material, in view of the high level of reactivity of the plasma.

The sea water will enter the evaporator via piping which is situated in the lower part of the icosahedron, through which the brine will also be drained off.

On the whole sea water which is collected at the statutory distance from the coast will be used and supplied to the pumps by means of energy which is preferably produced in a renewable energy unit, or by means of night-time supply of the network. The water is then pre-heated by means of solar energy, using known technologies for hot domestic water or the like, and with the possibility of direct generation of steam by means of thermo-solar procedures. When the water is at a certain temperature, it will be introduced into a heater in order to obtain the appropriate temperature and pressure by means of the use of electro-magnetic waves, such that, when the water is evaporated, it will leave a residue in the form of brine which will be returned to the sea, or will be able to be sold under certain conditions.

For a better understanding of the invention, and by way of explanatory but non-limiting example, schematic drawings which explain the present invention are appended.
Fig. 1 schematically shows the set of elements used for the generation of hydrogen according to the present invention.
Fig. 2 shows the capturing and pre-heating of the water in detail.

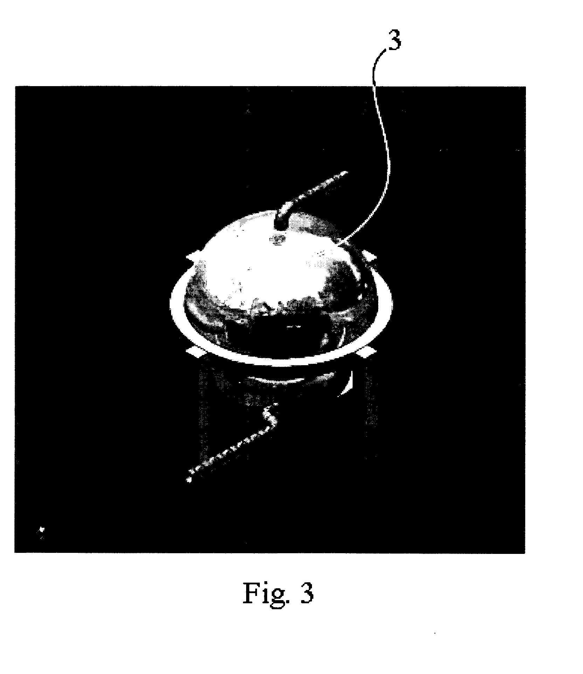

Fig. 3 schematically shows a heater-evaporator on an enlarged scale.

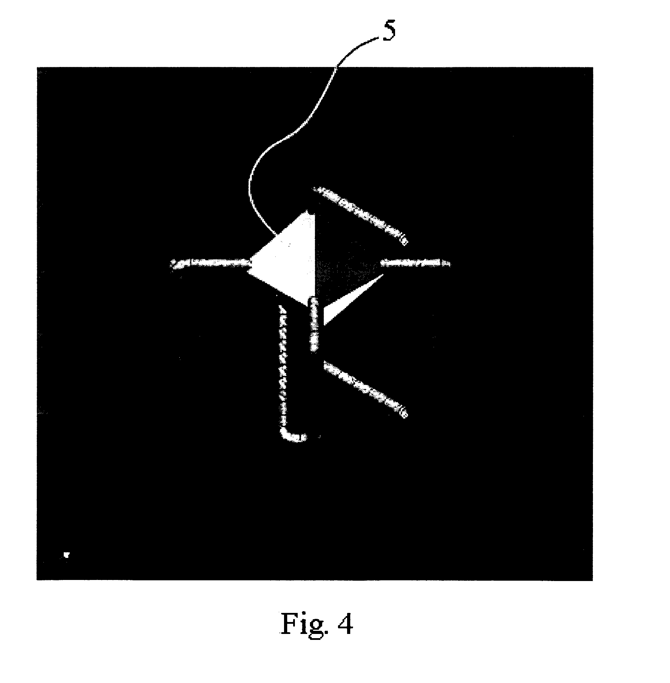

Fig. 4 is a perspective view of a plasma generator.

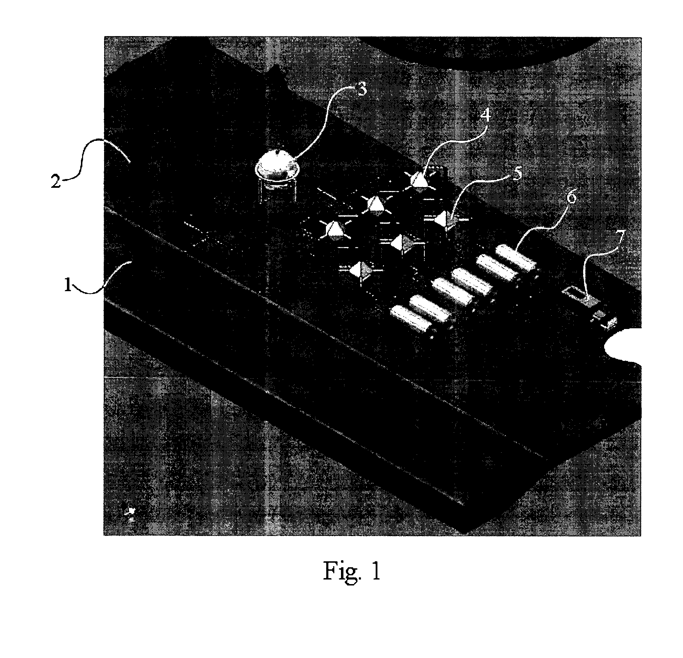

The invention is based on an abundant source of water, for example which originates from the sea or is of another type, represented by numeral 1 in Fig. 1, and on separate generation of electricity, for example by means of an installation 2 for supply of solar energy, with pre-heating of the water and conversion of the latter into steam in a heater-evaporator device 3, by means of vectorial electromagnetic waves, after which the steam in the generators 4 is transformed into plasma. Subsequently the plasma generated is transferred to the electrolysers 5, in which the decomposition of the plasma into hydrogen and oxygen is carried out by means of electrodes and by the activation of electromagnetic waves. The hydrogen and oxygen which are discharged from the electrolyser respectively via the upper and lower vertices of the octahedron will be stored in tanks 6, from which, and by means of a pressurisation and pumping station 7, they will be transferred via piping, tanks or other means to the places of supply.

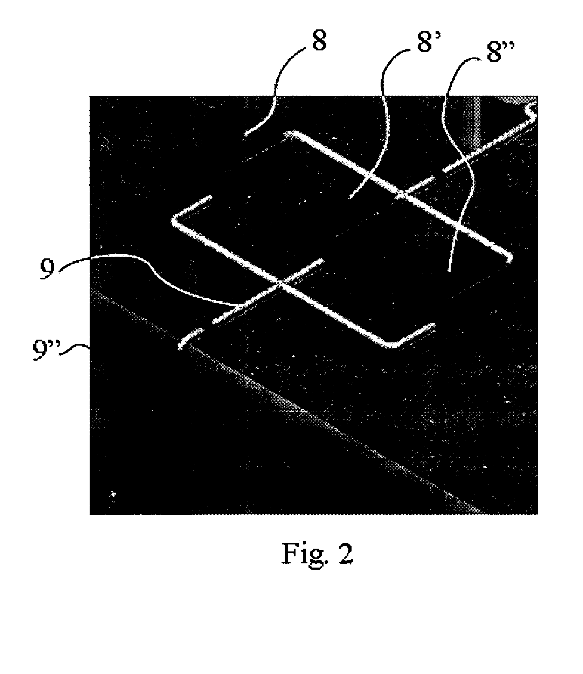

Fig. 2 shows three units in parallel 8, 8' and 8" for pre-heating of the water which is collected from the mass of sea water or water of another type 1 by means of the piping 9.

The water will previously be heated to a level of approximately 50 °C, and the subsequent heating will be carried out in the heating device by means of electrical vectorial fields of microwaves which are in resonance with the absorption peaks of the water, such that the electrical vectorial fields of microwaves heat and evaporate the water if their power is sufficient, and the electrical vectorial field of microwaves contributes towards the decrease in internal energy of the water, thus assisting the processes of creation of the plasma. If the phase transition takes place at a pressure which is greater than atmospheric pressure, the latent heat decreases, and increases as the pressure decreases. In order to maintain a continuous process of generation of steam, a constant pressure value will be established which ranges between 0.5 bar and approximately 2 bars, reaching a maximum limit of 5 bars.

The steam will be generated by applying vectorial electrical fields of 2.16 GHz in resonance with the absorption peaks of the water previously heated by means of solar energy. In other words, the water is heated by the Joule effect by means of the energy dissipated by the vectorial electrical fields in resonance.

The steam will enter the electrolysers via the four vertices corresponding to the horizontal square of the octahedron, in order to obtain homogeneous distribution.

The evaporators will preferably have a stable geometry such as an icosahedron, most of the volume of the latter being occupied by water and the remainder by steam.

The electrodes will preferably be flat, acting as directional antennae located outside the water, since sea water conducts electricity.

The method of reducing the possible formation of magnetic fields consists of using discrete electrodes which are located on some of the surfaces of the icosahedron.

In order to avoid problems of corrosion, the surface of the electrodes will be covered with a stable metal such as nickel, or based on a special steel which is resistant to corrosion.

For the dimensions of the icosahedron, it is envisaged that the radius of the sphere which surrounds the icosahedron is 3 metres. Consequently: 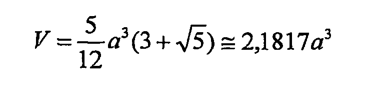 where a = 3.15438 metres when the radius R is 3 metres and V = 2.5359991*R*³ = 68.47m³.

Once the hydrogen and oxygen have been obtained separately and are duly stored, it will be possible to use oxygen to the industrial sector, and the hydrogen will be able to be transported at a suitable pressure and temperature by piping or other means, to the locations in which it is wished to generate water since the latter is in short supply naturally, and may be used by any of the means previously indicated.

Although the invention has been described with reference to preferred embodiments only as examples, these should not be considered to limit the invention, which will be defined by the broadest interpretation of the following claims.

## Claims

1. Method for using hydrogen, **characterised in that** it originates in a source of supply of sea water or water of another type, with pre-heating of the water by use of solar energy, followed by a stage of heating of the water in order to obtain steam, the latter being transformed into water plasma at a low temperature, the decomposition of the plasma then being carried out by hydrolysis by means of electrodes, with subsequent separation of the hydrogen and oxygen obtained, the hydrogen then being transported to the location in which water is to be generated, with oxidation of the hydrogen with recuperation of energy, and regeneration of water for direct use.

2. Method for using hydrogen according to claim 1, **characterised in that** the pre-heating of the water by means of solar thermal energy is carried out by heating said water to a temperature of between approximately 40 and 60 °C.

3. Method for using hydrogen according to claim 2, **characterised in that** the pre-heating of the water is carried out at approximately 50 °C.

4. Method for using hydrogen according to claim 1, **characterised in that** the heating of the water for the formation of steam takes place by means of electrical vectorial fields of microwaves in resonance with the absorption peaks of the water in said range of wave lengths.

5. Method for using hydrogen according to claim 4, **characterised in that** the heating of the water takes place with formation of steam at a pressure of between 0.5 bar and 5 bars approximately.

6. Method for using hydrogen according to claim 5, **characterised in that** the steam pressure is approximately 2 bars.

7. Method for using hydrogen, according to claim 1, **characterised in that** the formation of the plasma from the steam takes place by means of scalar electrical fields of microwaves in resonance with the absorption peaks of the steam in said range of wave lengths.

8. Apparatus for implementation of the method according to claims 1 to 7, **characterised in that** the heating for the generation of the steam takes place in reactors with an icosahedral structure, and the generation of the plasma and electrolysis of the latter for its decomposition by means of electrodes takes place in reactors with an octahedral structure.

9. Apparatus according to claim 8, **characterised in that** the intake and discharge of residues takes place via the lower part of the reactor in the form of an icosahedron.

10. Apparatus according to claim 8, **characterised in that** the electrodes which are designed to heat the water are flat electrodes which act as directional antennae, and are located outside the water.

11. Apparatus according to claim 10, **characterised in that** the electrodes are located outside the water which is contained in the reactor.

12. Apparatus according to claims 10 and 11, **characterised in that** the electrodes are covered by a stable metal which is resistant to corrosion.

13. Apparatus according to claim 8, **characterised in that** each of the surfaces of the octahedron of the plasma generator and of the electrolyser act as antennae which emit radiation in the direction perpendicular to each surface, thus generating an electrical vectorial field which is zero or a scalar electrical field.

14. Apparatus according to claim 8, **characterised by** the arrangement of multiple octahedral generators both in the plasma generation phase and in the electrolysis phase, in order to regularise the volumetric production flow.

15. Apparatus according to claim 8, **characterised in that** the inner surfaces of the faces of the octahedral body are covered with a layer of a material which exhibits stability in relation to the reactivity of the plasma.

16. Apparatus according to claim 8, **characterised in that** the intake of steam into the electrolysers takes place via the four vertices of the horizontal square of the octahedral form.

17. Apparatus according to claim 8, **characterised in that** the discharge of the hydrogen and oxygen from the electrolyser takes place respectively via the upper and lower vertices of the octahedral forms corresponding to the electrolysers of the plasma.

18. Apparatus according to claim 8, **characterised in that** the electrodes of the electrolyser which fulfil the function of separation of the hydrogen and the oxygen are supplied by direct current.

19. Apparatus according to claim 18, **characterised in that** the electrodes of the electrolyser which fulfil the function of separation of the gases have their positive pole close to the lower vertex, for discharge of the oxygen, and their negative pole close to the upper vertex, for discharge of the hydrogen.

## Amended claims

Statement under Art. 19.1 PCT
1. Method and apparatus for the production of hydrogen, **characterised in that** it originates in a source of sea water or water of another type, with pre-heating of the water by use of solar energy, followed by a stage of heating in order to obtain steam by heating of the water, by means of the Joule effect, for a vectorial field of microwaves, this steam being transformed into water plasma at a low temperature by means of scalar fields of microwaves generated by the superimposition of electrical vectorial fields of microwaves which are at the same frequency, and are emitted by directional antennae, the vectorial sum of which is zero (or also the fraction of energy of the superimposed electrical vectorial fields of different intensities, the partial sum of which is zero), and can generate water plasma not by discharge within the gas or heating the latter, but by means of transformation of the steam, the conductivity of which increases very strongly and gives rise to the phase transition without requiring the supply of exceptional heat, and as an alternative to thermal energy, the decomposition of the plasma then being carried out by hydrolysis by means of electrodes, with subsequent separation of the hydrogen and oxygen obtained, the hydrogen then being transported to the location in which water is to be generated, with oxidation of the hydrogen with recuperation of energy, and regeneration of water for direct use.

2. Method for using hydrogen according to claim 1, **characterised in that** the pre-heating of the water by means of solar thermal energy is carried out by heating said water to a temperature of between approximately 40 and 60 °C.

3. Method for using hydrogen according to claim 2, **characterised in that** the pre-heating of the water is carried out at approximately 50 °C.

4. Method for using hydrogen according to claim 1, **characterised in that** the heating of the water for the formation of steam takes place by means of electrical vectorial fields of microwaves in resonance with the absorption peaks of the water in said range of wave lengths.

5. Method for using hydrogen according to claim 4, **characterised in that** the heating of the water takes place with formation of steam at a pressure of between 0.5 bar and 5 bars approximately.

6. Method for using hydrogen according to claim 5, **characterised in that** the steam pressure is approximately 2 bars.

7. Method for using hydrogen according to claim 1, **characterised in that** the formation of the plasma from the steam takes place by means of scalar fields of microwaves generated by the superimposition of electrical vectorial fields of microwaves which are at the same frequency, and are emitted by directional antennae, the vectorial sum of which is zero (or also the fraction of energy of the superimposed electrical vectorial fields of different intensities, the partial sum of which is zero), and can generate water plasma not requiring discharge within the gas or heating the latter, but by means of transformation within the steam, the conductivity of which increases very strongly and gives rise to the phase transition without requiring the supply of exceptional heat, and as an alternative to thermal energy.

8. Apparatus for implementation of the method according to claims 1 to 7, **characterised in that** the heating for the generation of the steam takes place in reactors with an icosahedral structure, and the generation of the plasma and electrolysis of the latter for its decomposition by means of electrodes takes place in reactors with an octahedral structure.

9. Apparatus according to claim 8, **characterised in that** the intake and discharge of residues takes place via the lower part of the reactor in the form of an icosahedron.

10. Apparatus according to claim 8, **characterised in that** the electrodes which are designed to heat the water are flat electrodes which act as directional antennae, and are located outside the water.

11. Apparatus according to claim 10, **characterised in that** the electrodes are located outside the water which is contained in the reactor.

12. Apparatus according to claims 10 and 11, **characterised in that** the electrodes are covered by a stable metal which is resistant to corrosion.

13. Apparatus according to claim 8, **characterised in that** each of the surfaces of the octahedron of the plasma generator and of the electrolyser act as antennae which emit radiation in the direction perpendicular to each surface, thus generating an electrical vectorial field which is zero or a scalar electrical field.

14. Apparatus according to claim 8, **characterised by** the arrangement of multiple octahedral generators both in the plasma generation phase and in the electrolysis phase, in order to regularise the volumetric production flow.

15. Apparatus according to claim 8, **characterised in that** the inner surfaces of the faces of the octahedral body are covered with a layer of a material which exhibits stability in relation to the reactivity of the plasma.

16. Apparatus according to claim 8, **characterised in that** the intake of steam into the electrolysers takes place via the four vertices of the horizontal square of the octahedral form.

17. Apparatus according to claim 8, **characterised in that** the discharge of the hydrogen and oxygen from the electrolyser takes place respectively via the upper and lower vertices of the octahedral forms corresponding to the electrolysers of the plasma.

18. Apparatus according to claim 8, **characterised in that** the electrodes of the electrolyser which fulfil the function of separation of the hydrogen and the oxygen are supplied by direct current.

19. Apparatus according to claim 18, **characterised in that** the electrodes of the electrolyser which fulfil the function of separation of the gases have their positive pole close to the lower vertex, for discharge of the oxygen, and their negative pole close to the upper vertex, for discharge of the hydrogen.
